# EUROPEAN PATENT APPLICATION

(11) **EP 3 581 885 A1**
(43) Date of publication of application: **18.12.2019**
(21) Application number: 17895795.7
(22) Date of filing: 08.08.2017
(51) Int. Cl.: G01B 21/00

(54) **DIGITAL-DISPLAY MEASURING TOOL HAVING EXCESSIVE-DEVIATION ALERT DEVICE**

(30) Priority: 07.02.2017 CN 201720112336 U
(71) Applicant: Werka Co., Ltd., Shanghai 200050 (CN)
(72) Inventor: TIAN, Xiaodong, Shanghai 200050 (CN); WANG, Zhe, Shanghai 200050 (CN)
(74) Representative: Reitstötter Kinzebach
(86) International application number: PCT/CN2017/096400
(87) International publication number: WO 2018/145429

(57) **Abstract**

A digital-display measuring tool having an excessive-deviation alert device (2), comprising: a digital-display measuring appliance (1); a processor, provided within the digital-display measuring appliance (1) and used for calculating the differences between a measured value of the digital-display measuring appliance (1) and a preset standard value; and an excessive-deviation alert device (2), connected to the processor by means of signals and used for alert prompting according to the calculation results of the processor. A staff member can know whether the actual size values of a product to be tested comply with the standards, only by observing the excessive-deviation alert device (2) to instantly get a notification of detection results, improving the detection efficiency of the product, and reducing the workload of the staff member for checking the detection result.

## Description

The present application claims the priority to Chinese Patent Application No.201720112336.6, titled "DIGITAL-DISPLAY MEASURING TOOL HAVING EXCESSIVE-DEVIATION ALERT DEVICE", filed on February 7, 2017 with the Chinese Patent Office, which is incorporated herein by reference in its entirety.

### TECHNICAL FIELD

The present disclosure relates to the field of digital display technologies, and in particular to a digital display measuring instrument having an out-of-tolerance warning device.

### BACKGROUND

With the rapid development of science and technology, numerous products are demanded in the respective technical field. Therefore, an issue of improving an efficiency of product detection attracts increasing widespread attention.

During the product detection, for each of different technical fields, a digital display measuring instrument adapted to this technical field is used to detect a dimension, a size, a height or a weight of a product in this technical field.

At present, during the product detection, it is required to detect an existing parameter of each of products, and determine a difference between a value of the detected parameter of the product and a detection reference value, so as to screen out a product having an unrequired parameter. With the conventional detecting method, it is required to compare the value of the detected parameter with the detection reference value after the detection, which inevitably increases the workload of an operator, thus seriously affecting operation efficiency in a production mode such as an online detection mode and a batch detection mode.

Therefore, a technical problem urgently to be solved by those skilled in the art is how to improve the efficiency of product detection.

### SUMMARY

A digital display measuring instrument having an out-of-tolerance warning device is provided according to the present disclosure, with which the efficiency of product detection is improved, and a warning is outputted instantly, thereby greatly reducing the workload of an operator in processing the detection result.

To solve the above technical problem, the digital display measuring instrument having an out-of-tolerance warning device according to the present disclosure includes a digital display measurer, a processor and an out-of-tolerance warning device. The processor is arranged in the digital display measurer, and is configured to calculate a difference between a measured value of the digital display measurer and a preset reference value. The out-of-tolerance warning device is configured to receive signals of the processor and output a warning in response to a calculation result of the processor.

Preferably, the out-of-tolerance warning device is provided with a light warner configured to output a light as the warning.

Preferably, the light warner is an LED lamp.

Preferably, the out-of-tolerance warning device is provided with a sound warner configured to output a sound as the warning.

Preferably, the sound warner is a buzzer.

Preferably, the out-of-tolerance warning device is provided with both a light warner and a sound warner.

Preferably, the out-of-tolerance warning device is arranged in the digital display measurer, and is integrated on the circuit board of the digital display measurer.

Preferably, the digital display measuring instrument is further provided with a measuring means for clamping the to-be-detected member.

Preferably, the measuring means is a digital display caliper.

The digital display measuring instrument according to the present disclosure includes a digital display measurer, a processor, and an out-of-tolerance warning device. The digital display measurer is configured to measure a size of a to-be-detected member, and display a numerical value of the measured size. The processor is configured to receive signals of the digital display measurer, and perform an out-of-tolerance calculation on the numerical value of the size measured by the digital display measurer. The out-of-tolerance warning device is configured to receive signals of the processor, and output a warning in response to a result of the out-of-tolerance calculation performed by the processor. During an actual out-of-tolerance detection, the to-be-detected member is stabilized, and the size of the to-be-detected member is measured by the digital display measurer, the numerical value of the measured size is transmitted to the processor, and the processor performs an out-of-tolerance calculation on the numerical value of the measured size according to a predetermined algorithm. In a case that the result of the out-of-tolerance calculation meets a warning condition, the processor controls the out-of-tolerance warning device to output a warning. Compared with the conventional art in which it is required to compare the detection result with a reference detection value after the detection result is obtained, with the digital display measuring instrument according to the present disclosure which includes the digital display measurer, the processor, the out-of-tolerance warning device, it is only required to measure the size of the to-be-detected member, and it may be determined whether the size of the to-be-detected member meets a requirement by referring to an output of the out-of-tolerance warning device, which leads to a brief product detection process. In this way, the efficiency of product detection is improved, and the workload of an operator in processing the detection result can be greatly reduced by outputting a warning instantly.

### BRIEF DESCRIPTION OF THE DRAWINGS

In order to describe the technical solutions in the embodiments of the present disclosure or in the conventional art more clearly, drawings to be used in the description of the embodiments or the conventional art are described briefly. Apparently, the drawings described below only show some of embodiments of the present disclosure, and other drawings may be obtained by those skilled in the field from these drawings without any creative effort.

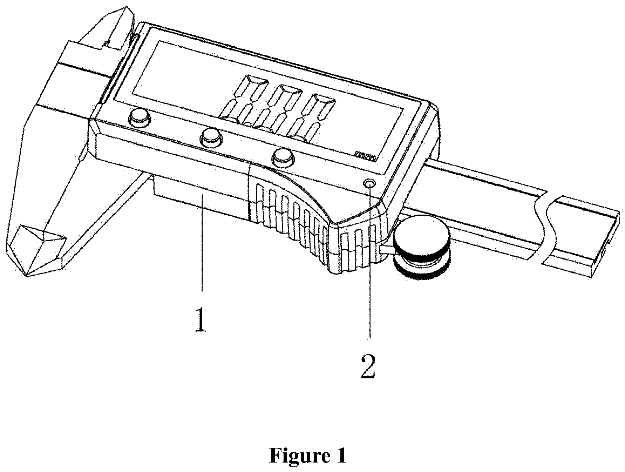

Figure 1 is a schematic structural diagram of a digital display measuring instrument having an out-of-tolerance warning device according to an embodiment of the present disclosure.

Reference numerals in Figure 1 are listed as follows:
1 digital display measuring instrument
2 out-of-tolerance warning device

### DETAILED DESCRIPTION OF THE EMBODIMENTS

The technical solutions according to the embodiments of the present disclosure are described clearly and completely hereinafter with reference to the drawings in embodiments of the present disclosure. Apparently, the described embodiments are only some rather than all of the embodiments of the present disclosure. Based on the embodiments of the present disclosure, all other embodiments obtained by those skilled in the art without any creative effort should fall within the protection scope of the present disclosure.

Reference is made to Figure 1, which is a digital display measuring instrument having an out-of-tolerance warning device according to an embodiment of the present disclosure.

In the embodiment of the present disclosure, the digital display measuring instrument includes a digital display measurer 1, a processor, and an out-of-tolerance warning device 2.

The digital display measurer 1 is configured to measure a size of a to-be-detected member, and display a numerical value of the measured size. The processor is configured to receive signals of the digital display measurer 1, and perform an out-of-tolerance calculation on the numerical value of the size measured by the digital display measurer 1. The out-of-tolerance warning device 2 is configured to receive signals of the processor, and output a warning in response to a result of the out-of-tolerance calculation performed by the processor.

During an actual out-of-tolerance detection, the to-be-detected member is stabilized, and the size of the to-be-detected member is measured by the digital display measurer 1, the numerical value of the measured size is transmitted to the processor, and the processor performs an out-of-tolerance calculation on the numerical value of the measured size according to a predetermined algorithm. In a case that the result of the out-of-tolerance calculation meets a warning condition, the processor controls the out-of-tolerance warning device 2 to output a warning.

In order to facilitate observing the warning, in a preferred embodiment, the out-of-tolerance warning device 2 may be provided with a light warner, such as an LED lamp, or another light emitting element. In a case that the numerical value of the measured size is not equal to a reference value, the LED lamp emits a flashing light to warn that the size of the to-be-detected member does not meet the requirement, and in a case that the numerical value of the measured size is equal to the reference value, the LED lamp emits no light, such that it may be determined that the size of the to-be-detected member meets the requirement. Alternatively, the LED lamp may emit a constant red light in a case that the size of the to-be-detected member does not meet the requirement, and the LED lamp may emit a constant green light in a case that the size of the to-be-detected member meets the requirement.

The out-of-tolerance warning device 2 may be provided with a sound warner, such as a buzzer, or another sound production element. In a case that the numerical value of the measured size is not equal to the reference value, the buzzer outputs a sound to warn that the size of the to-be-detected member does not meet the requirement, and in a case that the numerical value is equal to the reference value, the buzzer outputs no sound, such that it may be determined that the size of the to-be-detected member meets the requirement.

The out-of-tolerance warning device 2 may further be provided with both the light warner and the sound warner, for example, with both the LED lamp and the buzzer. Specifically, in a case that it is determined by the out-of-tolerance calculation that the numerical value of the measured size is not equal to the reference value, the LED lamp emits a flashing light and the buzzer outputs a sound, to warn that the size of the to-be-detected member does not meet the requirement, and in a case that the numerical value is equal to the reference value, the LED lamp emits no light and the buzzer outputs no sound, such that it is determined that the size of the to-be-detected member meets the requirement.

Generally, the processor and the digital display measurer are integrated into a unitary structure. In order to improve the utilization of the unitary structure, the out-of-tolerance warning device 2 may be arranged in the digital display measurer 1, and is integrated on a circuit board of the digital display measurer 1. In this way, the digital display measuring instrument has a simple unitary structure, which is hold easily by an operator for measurement. Alternatively, the out-of-tolerance warning device 2 may be connected to the processor via a data line, since the processor is arranged in the digital display measurer 1, the out-of-tolerance warning device 2 is connected to the digital display measurer 1 via the data line, and signals may be transmitted therebetween.

Alternatively, the measurement result may be monitored remotely. In this case, signals may be transmitted between the out-of-tolerance warning device 2 and the digital display measurer 1 wirelessly.

The measuring means of the digital display measuring instrument may be a digital display caliper, a digital display height gauge, a digital display gradienter, a digital display indicator, a digital display micrometer, a digital display angle scale, a digital display scale, a digital display data collector or the like.

In summary, the digital display measuring instrument according to the present disclosure includes a digital display measurer 1, a processor, and an out-of-tolerance warning device 2. The digital display measurer 1 is configured to measure a size of a to-be-detected member, and display a numerical value of the measured size. The processor is configured to receive signals of the digital display measurer 1, and perform an out-of-tolerance calculation on the numerical value of the size measured by the digital display measurer 1. The out-of-tolerance warning device 2 is configured to receive signals of the processor, and output a warning in response to a result of the out-of-tolerance calculation performed by the processor. During an actual out-of-tolerance detection, the to-be-detected member is stabilized, and the size of the to-be-detected member is measured by the digital display measurer 1, the numerical value of the measured size is transmitted to the processor, and the processor performs an out-of-tolerance calculation on the numerical value of the measured size according to a predetermined algorithm. In a case that the result of the out-of-tolerance calculation meets a warning condition, the processor controls the out-of-tolerance warning device 2 to output a warning. Compared with the conventional art in which it is required to compare the detection result with a reference detection value after the detection result is obtained, with the digital display measuring instrument according to the present disclosure which includes the digital display measurer 1, the processor, the out-of-tolerance warning device 2, it is only required to measure the size of the to-be-detected member, and it may be determined whether the size of the to-be-detected member meets a requirement by referring to an output of the out-of-tolerance warning device 2, which leads to a brief product detection process. In this way, the efficiency of product detection is improved, and the workload of an operator in processing the detection result can be greatly reduced by outputting a warning instantly.

Based on the above description of the disclosed embodiments, those skilled in the art may implement or use the present disclosure. Apparently, many modifications may be made to the embodiments of the present disclosure by those skilled in the art. The principles defined herein may be implemented in other embodiments without departing from the spirit or scope of the present disclosure. Therefore, the present disclosure is not limited to the embodiments described herein, but complies with the broadest scope consistent with the principles and novel features disclosed herein.

## Claims

1. A digital display measuring instrument having an out-of-tolerance warning device, comprising:
a digital display measurer (1);
a processor arranged in the digital display measurer (1), wherein the processor is configured to calculate a difference between a measured value of the digital display measurer (1) and a preset reference value; and
an out-of-tolerance warning device (2) configured to receive signals of the processor, and output a warning in response to a calculation result of the processor.

2. The digital display measuring instrument according to claim 1, wherein the out-of-tolerance warning device (2) is provided with a light warner configured to output a light as the warning.

3. The digital display measuring instrument according to claim 2, wherein the light warner is an LED lamp.

4. The digital display measuring instrument according to claim 1, wherein the out-of-tolerance warning device (2) is provided with a sound warner configured to output a sound as the warning.

5. The digital display measuring instrument according to claim 4, wherein the sound warner is a buzzer.

6. The digital display measuring instrument according to claim 1, wherein the out-of-tolerance warning device (2) is provided with both a light warner and a sound warner.

7. The digital display measuring instrument according to any one of claims 1 to 6, wherein the out-of-tolerance warning device (2) is arranged in the digital display measurer (1), and is integrated on a circuit board of the digital display measurer (1).

8. The digital display measuring instrument according to claim 7, wherein the digital display measuring instrument (1) is further provided with a measuring means for clamping a to-be-detected member.

9. The digital display measuring instrument according to claim 8, wherein the measuring means is a digital display caliper.
